# EUROPÄISCHE PATENTANMELDUNG

(11) **EP 0 955 077 A1**
(43) Veröffentlichungstag der Anmeldung: **10.11.1999**
(21) Anmeldenummer: 99890132.6
(22) Anmeldetag: 22.04.1999
(51) Int. Cl.: B01D 21/22

(54) **Frostschutzeinrichtung**

(30) Priorität: 28.04.1998 AT 27498
(71) Anmelder: Mitterlehner, Hans, 4452 Ternberg (AT)
(72) Erfinder: Die Erfindernennung liegt noch nicht vor
(74) Vertreter: Hübscher, Helmut, Dipl.-Ing.

(57) **Zusammenfassung**

Die Frostschutzeinrichtung (1) dient zur Verhinderung von durch Vereisung freiliegender, bewegter, angetriebener oder getriebener Teile bzw. deren Führungen bedingten Funktionsstörungen in Kläranlagen. Sie besitzt wenigstens eine Auftragseinrichtung (10, 11) zum dosierten Auftragen eines insbesondere flüssigen oder pastösen Frostschutzmittels auf die sonst einem die Funktion störenden Eisbesatz ausgesetzten Oberflächen der Teile (12) bzw. Führungen (13) und einen an der Anlage (14) angebrachten Vorratsbehälter (4) für dieses Frostschutzmittel, der über wenigstens ein Absperrorgan mit dieser Auftragseinrichtung (10, 11) verbunden ist.

## Beschreibung

Die Erfindung betrifft eine Frostschutzeinrichtung zur Verhinderung von durch Vereisung freiliegender, bewegter, angetriebener oder getriebener Teile bzw. deren Führungen bedingten Funktionsstörungen in Kläranlagen.

In den Klär- und Absetzbecken von Kläranlagen sind Räumer verschiedenster Form im Einsatz. Ebenso sind verschiedenste Beckenformen, z. B. Rund- oder Längsbecken, bekannt, wobei bei Rundbecken langsam drehende Räumer mit in das Becken eintauchenden Rechenteilen Verwendung finden. Diese Räumer werden ebenso wie rechenartige Räumer in Längsbecken über auf Fahrbahnen oder Geleisen abgestützte, über Elektromotoren angetriebene Räder drehend bzw. hin- und hergehend fortbewegt. Bei einem Durchrutschen oder Blockieren des oder der Räder kann es zu einem Stillstand des Rechens bzw. im Extremfall, insbesondere wenn nur das Rad an der einen Beckenseite durchdreht oder blockiert wird, sogar zu einem Absturz des Rechens kommen. Die Wiederaufnahme des Betriebes wird durch erhöhte Einfriergefahr des Beckeninhaltes und auch dadurch erschwert, daß sich in der Zeit des Stillstandes des Räumers größere Mengen an Feststoffen im Becken absetzen, die dann bei der neuerlichen Inbetriebnahme des Räumers unter hohem Kraftaufwand aufgelockert und weiterbewegt werden müssen. Es ist zwar insbesondere bei mit Elektromotoren für den Antrieb der Räder ausgestatteten Räumern bekannt, die Räder über elektrische Heizeinrichtungen, die hier als Frostschutzeinrichtung dienen, zu erwärmen, doch ist diese Maßnahme in vielen Fällen nicht zielführend, da durch das Aufheizen der Räder zwar Eis und Schnee von den Rädern selbst abgeschmolzen werden, die dann nassen Räder aber auf der zugeordneten Fahrbahn bei deren Vereisung einer erhöhten Rutschgefahr ausgesetzt sind. Bereits zum Aufwärmen der Räder ergibt sich ein relativ hoher Energiebedarf. Eine Beheizung der Fahrbahnen selbst durch Warmwasser- oder Warmluftbeheizung ist zwar aus der DE 36 10 720 A bekannt, bedingt aber hohe Energiekosten und ist überdies nur dann möglich, wenn die Fahrbahnen von Haus aus mit entsprechenden Heizeinrichtungen ausgestattet sind und außerhalb des Eingriffsbereiches der Räder mit Wärmeisolierungen versehen werden. Nach der DE 36 14 666 A werden die Rechen von Kläranlagenräumern mit elektrischen Heizeinrichtungen ausgestattet.

Bei sogenannten Kettenräumern mit umlaufender, über Kettenräder getriebener Kette, die über den Boden eines Absetzbeckens kratzende Mitnehmer trägt, wird aus konstruktiven Gründen der aufsteigende und zum rücklaufenden Trum führende Teil der Kette über oberhalb des Füllbereiches des Beckens vorgesehene angetriebene Kettenräder oder -trommeln geführt. Diese und auch andere, lediglich der Führung dienende Kettenräder, die im Freien anzubringen sind, unterliegen bei entsprechend niedrigen Außentemperaturen dem Eisbesatz. Dieser kann zu einem ungenügenden Eingriff der Daumen der Kettenräder in die Kettenglieder und damit zu einem Durchdrehen der Antriebsräder, aber auch zu einem Ausspringen der Kette bzw. zu einem Bruch von Kettengliedern oder von Daumen der Kettenräder führen. Eine in der DE 31 35 215 vorgesehene Anordnung der Kettenräder in der Weise, daß sie dauernd in das Abwasser eintauchen, läßt sich konstruktiv nur mit hohem Aufwand unter besonderem Schutz der Motoren verwirklichen.

Aufgabe der Erfindung ist es demnach, eine Frostschutzeinrichtung für den eingangs genannten Zweck zu schaffen, die grundsätzlich für den Einsatz bei allen bekannten Kläranlagen geeignet ist, einen weitgehend sicheren Vereisungsschutz gewährleistet und auch nachträglich problemlos in bestehende Kläranlagen eingebaut werden kann.

Die gestellte Aufgabe wird prinzipiell durch wenigstens eine Auftragseinrichtung zum dosierten Auftragen eines insbesondere flüssigen oder pastösen Frostschutzmittels auf die sonst einem die Funktion störenden Eisbesatz ausgesetzten Oberflächen der Teile bzw. Führungen und einen an der Anlage angebrachten Vorratsbehälter für dieses Frostschutzmittel, der über wenigstens ein Absperrorgan mit dieser Auftragseinrichtung verbunden ist, gelöst.

Die Auftragseinrichtung wird vorzugsweise als Abtropfeinrichtung oder Sprühoder Spritzdüse ausgeführt. Im letzteren Fall wird der notwendige Betriebsdruck durch ein entsprechendes Gefälle oder auch durch Druckgasbeaufschlagung aus entsprechenden Patronen oder einer sonstigen Druckluftquelle bzw. durch Aufpumpen der sonst geschlossenen Vorratsbehälter erhalten. Auch schaltbare und dadurch die Abgabemenge dosierende Pumpen, z. B. Membranpumpen, die sogar das Absperrorgan bilden können, sind möglich. Die jeweils abzugebende Menge an Frostschutzmittel wird in Abhängigkeit von der Außentemperatur, der Art der Anlage und den weiteren Betriebsparametern eingestellt. Bevorzugte Anwendungsfälle der erfindungsgemäßen Frostschutzeinrichtung sind Längs- und Rundräumer sowie Kettenräumer.

Dabei ist erfindungsgemäß die Auftragseinrichtung bei einer mit Rädern auf einer Fahrbahn abgestützten Längs- oder Rundräumern ausgestatteten Kläranlage mit dem Vorratsbehälter am Räumer selbst angebracht und trägt das Frostschutzmittel auf das oder die Laufräder des Räumers oder deren Fahrbahn auf. Unter dem Sammelbegriff Längs- oder Rundräumer werden auch ähnliche Kläranlagen, z. B. Ovalräumer, verstanden. Auch sogenannte Saugräumer, bei denen statt eines Räumschildes oder eines Rechens eine Saugeinrichtung mittels des am Beckenrand fahrenden Räumers über den Beckenboden bewegt wird, um die abgesetzten Stoffe zu entfernen, sind hier möglich.

Im anderen Fall ist die Auftragseinrichtung bei einer mit einem Kettenräumer mit umlaufender, über Kettenräder getriebenen Kette ausgestatteten Kläranlage dem aus dem Klär- oder Absetzbecken herausgeführten Kettenteil oder dem Umfangsbereich eines freiliegenden Kettenrades, insbesondere dem Antriebskettenrad, zugeordnet, wobei ein sich sonst bildender Eisbesatz, insbesondere am Kettenrad, überhaupt verhindert wird, da er wegen dem aufgetragenen Frostschutzmittel nicht festfrieren kann. Die Gefahr eines Eisbesatzes an der Kette ist geringer, da diese beim Betrieb immer wieder in das Becken eintaucht. Bei einer extrem langen Kettenführung oberhalb des Beckens kann man aber das Frostschutzmittel auch auf die Kette auftragen.

Die erfindungsgemäße Frostschutzeinrichtung wird selbstverständlich nur in der eine Frostgefährdung bedingenden Jahreszeit betrieben bzw. eingesetzt. Um einen weitgehend wartungsfreien Betrieb zu gewährleisten, ist zur selbsttätigen Steuerung des Absperrorganes ein Frostwächter vorgesehen. Im einfachsten Fall besteht dieser Frostwächter aus einem Temperaturfühler, der ab einer bestimmten wählbaren Temperatur, z. B. + 2° C, das Absperrorgan öffnet, wobei der Öffnungsgrad mit zunehmender Abkühlung vergrößert werden kann. Eine einfache Ausführung des Temperaturfühlers wäre hier durch ein Bimetall verwirklicht.

Es ist selbstverständlich anzustreben, daß nur soviel Frostschutzmittel aufgetragen, also verbraucht wird, als tatsächlich für den momentanen Enteisungsfall nötig ist. Hier kann man eine weitgehende Anpassung auch an die Betriebsverhältnisse verschiedener Kläranlagen dadurch erzielen, daß eine vorzugsweise im Bereich des Vorratsbehälters angeordnete elektronische Steuereinheit zur Steuerung des Absperrorganes dient, welche Steuereinheit mit wenigstens einem Außentemperaturfühler verbunden ist und das Absperrorgan nach einem von dieser Außentemperatur abhängigen und auf Betriebsparameter, z. B. die Fahrgeschwindigkeit, die Beckengröße der jeweiligen Kläranlage und das verwendete Frostschutzmittel zusätzlich abstimmbaren Programm steuert. Zusätzlich zur Außentemperatur können bei der Erstellung bzw. Auswahl der Steuerprogramme auch weitere, der Steuereinheit zugeführte Faktoren berücksichtigt werden. So können zusätzliche Fühler für die momentane Luftfeuchtigkeit, aber auch Niederschlagswächter mit der Steuereinheit verbunden werden. Bewegungsfühler, die z. B. bei einem Durchrutschen der Räder Abweichungen der lstgeschwindigkeit des Räumers von der durch den Antrieb vorgegebenen Sollgeschwindigkeit erfassen, sind ebenfalls möglich. Das Steuerprogramm kann nach Abstimmung auf die jeweilige Kläranlage in einem fest programmierbaren Speicher gespeichert sein. Es ist aber auch möglich, einen Speicher für mehrere verschiedene Betriebsprogramme vorzusehen und eine Auswahleinrichtung einzusetzen, über die eine Auswahl je nach Anlage, momentanen Betriebsverhältnissen und herrschender Außentemperatur aus den verschiedenen Programmen vorgenommen wird. Beispielsweise kann man bei Längs- und Rundräumern die Dosierung des aufgetragenen Frostschutzmittels temperaturabhängig variieren und bzw. oder das Auftragen des Frostschutzmittels bei noch relativ höheren Temperaturen knapp oberhalb des Gefrierpunktes auf einen einmaligen Auftrag auf die Fahrbahn beschränken, der nach wählbaren Perioden erst nach einigen vollständigen Umläufen des Rechens wiederholt wird, wobei die Häufigkeit der Wiederholung mit abnehmender Außentemperatur zunimmt. Die Steuereinheit kann mit einer eigenen Versorgungsbatterie ausgestattet werden. Bei einer vorhandenen Starkstromzufuhr, z. B. zu Laufradmotoren von Längs- oder Rundräumern, wird man eine Steuereinheit mit Stützbatterie für die Speicher und an den Starkstrom angeschlossener Gleichrichterschaltung für die Regelleistung verwenden. Bei Anbringen der Steuereinheit im Freien kann für den entsprechenden Kasten eine nur wenig Leistung benötigende elektrische Beheizung vorgesehen werden.

Die Steuereinheit kann zusätzlich eine optische oder akustische Anzeigeeinrichtung für den momentanen Betriebszustand und bzw. oder den Füllzustand des Vorratsbehälters steuern.

Das verwendete, vorzugsweise flüssige Frostschutzmittel muß für die Verwendung in der jeweiligen Kläranlage zulässig sein, also zu keiner Kontaminierung des aus der Kläranlage abfließenden, gereinigten Wassers führen bzw. auch den Aufbereitungsprozeß nicht nachteilig beeinflussen. Um zu gewährleisten, daß nur entsprechend zulässige Frostschutzmittel, z. B. auf Methylalkoholbasis, Verwendung finden, ist in Weiterbildung der Erfindung der Vorratsbehälter nach Art einer Nachfüllpatrone auf bzw. in einen nur zum Originalverschluß dieser Patrone passenden, mit dem Absperrorgan verbundenen Anschlußteil auf- oder einsetzbar. Zusätzlich kann das Frostschutzmittel in einer auffälligen Kennfarbe eingefärbt sein. Eine solche Kennfarbe erleichtert auch die Ersteinstellung der Steuereinrichtung, da z. B. eine ausreichende Einfärbung einer Fahrbahn auch einen ausreichenden Frostschutz anzeigt.

Weitere Einzelheiten und Vorteile des Erfindungsgegenstandes entnimmt man der nachfolgenden Zeichnungsbeschreibung. In der Zeichnung ist der Erfindungsgegenstand beispielsweise veranschaulicht. Es zeigen
- Fig. 1: eine erfindungsgemäße Frostschutzeinrichtung in ihrer Montagestellung auf einem Rund- oder Längsräumer schematisiert in Seitenansicht,
- Fig. 2: das Prinzipschaltschema einer Steuereinrichtung,
- Fig. 3: schematisch einen mit einer erfindungsgemäßen Frostschutzeinrichtung ausgestatteten Rundräumer in Draufsicht,
- Fig. 4: eine Längsschnittdarstellung zu Fig. 3 und
- Fig. 5: ein mit einem Kettenräumer ausgestattetes Absetzbecken mit erfindungsgemäßer Frostschutzeinrichtung schematisch im Längsschnitt.

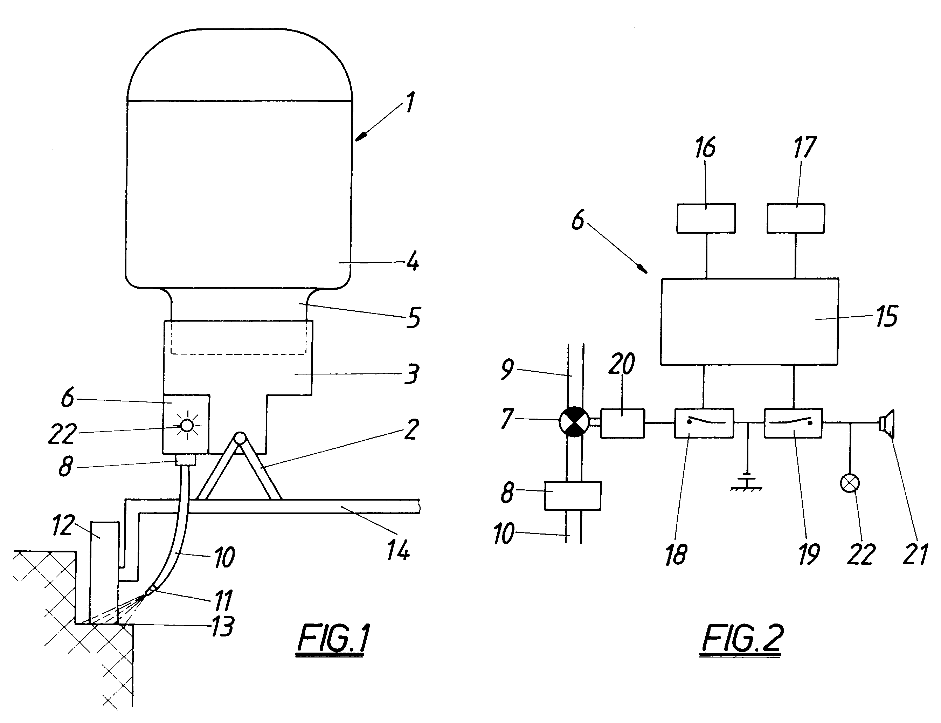

Die Frostschutzeinrichtung 1 besitzt ein die ortsfeste Montage ermöglichendes Traggestell 2 und einen Haltekopf 3, an dem über einen besonders geformten Anschlußteil ein Vorratsbehälter 4 mit seinem z. B. durch eine Membran verschlossenen Hals 5 als Nachfüllpatrone befestigbar ist. Der Membranverschluß wird beim Aufsetzen über Dorne od. dgl. selbsttätig geöffnet. Der Vorratsbehälter 4 enthält ein Frostschutzmittel. Am Haltekopf 3 ist eine Steuereinrichtung 6 angebracht, die ein Absperrorgan 7, z. B. einen Schieber oder einen Hahn, in einer aus dem Haltekopf 3 zu einem Anschlußteil 8 führenden Leitung 9 steuert. An den Anschlußteil 8 kann ein Rohr oder ein Schlauch 10 anschließen, der in einer beim Ausführungsbeispiel nach Fig. 1 als Spritzdüse 11 ausgeführten Auftragseinrichtung mündet. Es kann auch eine Sprühdüse oder ein einfacher Tropfauslaß vorgesehen werden. Nach Fig. 1 ist diese Spritzdüse 11 mit Abstand von einem Laufrad 12 gegen eine Fahrbahn 13 für das Laufrad des als Rund- oder Längsräumer ausgebildeten Räumers gerichtet, von dem nur der obere Träger 14 gezeigt wurde, auf dem sich die Frostschutzeinrichtung 1 abstützt.

Nach Fig. 2 besteht die Steuereinheit 6 aus einem programmierbaren Mikroprozessor 15, der mit einem Temperaturfühler 16 und einem Füllstandsfühler 17 verbunden ist und elektronische Schalteinrichtungen 18, 19 steuert. Über die Schalteinrichtung 18 wird ein Motor oder sonstiges Stellglied 20 für das Absperrorgan 7 in Abhängigkeit von den Steuerbefehlen der Steuereinrichtung 15 betätigt. Der Schalter 19 dient zum Ein- und Ausschalten eines akustischen Signalgebers 21 und bzw. oder einer als Lampe dargestellten optischen Anzeigeeinrichtung 22. Die Signalgeber 21, 22 werden zur Anzeige des Betriebszustandes verwendet, wobei der optische Signalgeber 22 z. B. den Einschaltzustand der Einrichtung anzeigt und der akustische Signalgeber 21 eingeschaltet wird, wenn der Füllstandsfühler 17 anzeigt, daß der Vorratsbehälter 4 leer ist oder nur mehr einen geringen Vorrat an Frostschutzmittel enthält.

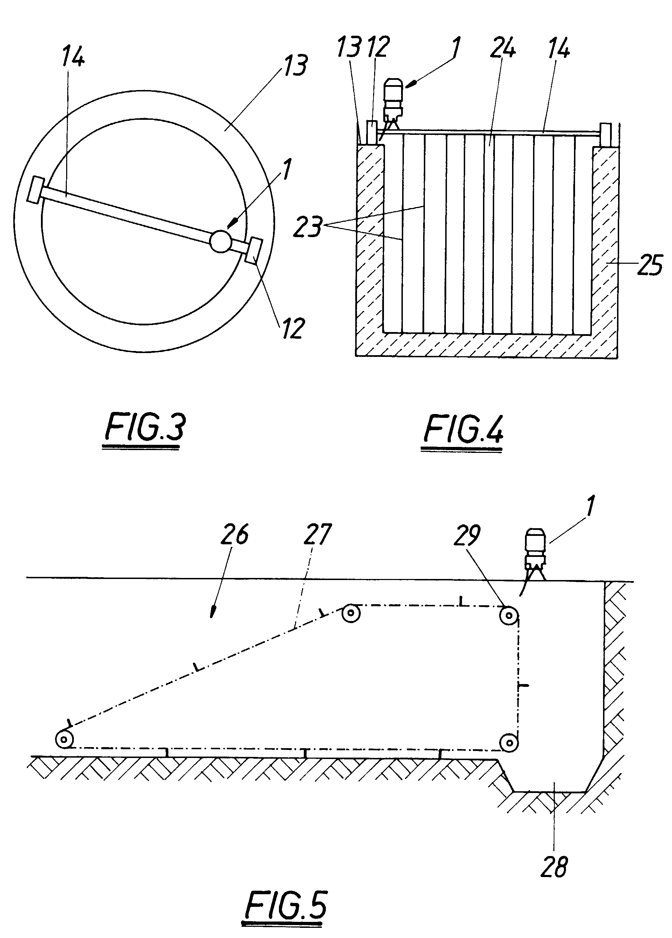

Fig. 3 und 4 zeigen die Anbringung einer erfindungsgemäßen Frostschutzeinrichtung 1 auf einem Rechenräumer eines runden Absetzbeckens. Dabei wurden die Rechenelemente mit 23, eine mittlere Drehachse des Räumers mit 24 und das zylindrische Absetzbecken mit 25 bezeichnet. Hier ist die Frostschutzeinrichtung 1 nur dem einen Rad 12 zugeordnet. Im Bedarfsfall können beiden Rädern 12 entsprechende Frostschutzeinrichtungen 1 zugeordnet werden. Dies ist selbstverständlich bei Längsräumern mit hin- und hergehend über die Länge des in Draufsicht rechteckigen Beckens verstellbarem Rechen notwendig. Es ist auch möglich, das Rad 12 unmittelbar mit dem Frostschutzmittel zu beaufschlagen. Wird das Frostschutzmittel auf die Fahrbahn 13 aufgetragen, dann kann zwischen der Auftragseinrichtung 11 und dem Rad 12 im Sinne eines Vorlaufes ein Abstand eingehalten werden, damit das Frostschutzmittel wirken kann, ehe das Rad die betreffende Fahrbahnstelle erreicht.

Das Absetzbecken 26 einer Kläranlage nach Fig. 5 ist mit einem Kettenräumer mit endlos umlaufender Kette 27 ausgestattet, wobei diese Kette 27 bzw. ein entsprechendes Kettenpaar über den Boden des Beckens 26 streifende Mitnehmer trägt, die in Richtung auf eine rinnenförmige Vertiefung 28 fördern. Eine erfindungsgemäße Frostschutzeinrichtung 1 ist an einem Querträger oberhalb des Beckens angebracht und besprüht ein Antriebskettenrad 29 und bzw. oder das aus dem Becken auftauchende aufsteigende Trum der Kette 27.

## Patentansprüche

1. Frostschutzeinrichtung (1) zur Verhinderung von durch Vereisung freiliegender, bewegter, angetriebener oder getriebener Teile bzw. deren Führungen bedingten Funktionsstörungen in Kläranlagen, gekennzeichnet durch wenigstens eine Auftragseinrichtung (9 - 11) zum dosierten Auftragen eines insbesondere flüssigen oder pastösen Frostschutzmittels auf die sonst einem die Funktion störenden Eisbesatz ausgesetzten Oberflächen der Teile (12, 27, 29) bzw. Führungen (13) und einen an der Anlage angebrachten Vorratsbehälter (4) für dieses Frostschutzmittel, der über wenigstens ein Absperrorgan (7) mit dieser Auftragseinrichtung (9 - 11) verbunden ist.

2. Frostschutzeinrichtung nach Anspruch 1, dadurch gekennzeichnet, daß die Auftragseinrichtung (9 - 11) bei einer mit Rädern (12) auf einer Fahrbahn (13) abgestützten Längs- oder Rundräumern (14, 23, 24) ausgestatteten Kläranlage mit dem Vorratsbehälter (4) am Räumer (14) selbst angebracht ist und das Frostschutzmittel auf das oder die Laufräder (12) des Räumers oder deren Fahrbahn (13) aufträgt (Fig. 3 und 4)

3. Frostschutzeinrichtung nach Anspruch 1, dadurch gekennzeichnet, daß die Auftragseinrichtung (1) bei einer mit einem Kettenräumer mit umlaufender, über Kettenräder (29) getriebenen Kette (27) ausgestatteten Kläranlage dem aus dem Klär- oder Absetzbecken (26) herausgeführten Kettenteil oder dem Umfangsbereich eines freiliegenden Kettenrades (29), insbesondere dem Antriebskettenrad, zugeordnet ist.

4. Frostschutzeinrichtung nach einem der Ansprüche 1 bis 3, dadurch gekennzeichnet, daß zur selbsttätigen Steuerung des Absperrorganes (7) ein Frostwächter (16) vorgesehen ist.

5. Frostschutzeinrichtung nach Anspruch 4, dadurch gekennzeichnet, daß eine vorzugsweise im Bereich des Vorratsbehälters (4) angeordnete elektronische Steuereinheit (15) zur Steuerung des Absperrorganes (7) dient, welche Steuereinheit (15) mit wenigstens einem Außentemperaturfühler (16) verbunden ist und das Absperrorgan (7) nach einem von dieser Außentemperatur abhängigen und auf Betriebsparameter, z. B. die Fahrgeschwindigkeit, die Beckengröße der jeweiligen Kläranlage und das verwendete Frostschutzmittel zusätzlich abstimmbaren Programm steuert.

6. Frostschutzeinrichtung nach Anspruch 5, dadurch gekennzeichnet, daß die Steuereinheit zusätzlich eine optische oder akustische Anzeigeeinrichtung (21, 22) für den momentanen Betriebszustand und bzw. oder den Füllzustand des Vorratsbehälters (4) steuert.

7. Frostschutzeinrichtung nach einem der Ansprüche 1 bis 6, dadurch gekennzeichnet, daß der Vorratsbehälter (4) nach Art einer Nachfüllpatrone auf bzw. in einen nur zum Originalverschluß dieser Patrone passenden, mit dem Absperrorgan (7) verbundenen Anschlußteil (3) auf- oder einsetzbar ist.

8. Frostschutzeinrichtung nach einem der Ansprüche 1 bis 7, dadurch gekennzeichnet, daß das Frostschutzmittel in einer auffälligen Kennfarbe eingefärbt ist.
